(19) Europäisches Patentamt

European Patent Office

Office européen des brevets

(11) Veröffentlichungsnummer : **0 353 377 B1**

(12) **EUROPÄISCHE PATENTSCHRIFT**

(45) Veröffentlichungstag der Patentschrift :
**18.03.92 Patentblatt 92/12**

(21) Anmeldenummer : **89101764.2**

(22) Anmeldetag : **02.02.89**

(51) Int. Cl.⁵ : $B60N\ 2/28$, $B60R\ 22/10$

(54) **Kindersicherheitssitz.**

(30) Priorität : **06.07.88 DE 8808637 U**

(43) Veröffentlichungstag der Anmeldung :
**07.02.90 Patentblatt 90/06**

(45) Bekanntmachung des Hinweises auf die
Patenterteilung :
**18.03.92 Patentblatt 92/12**

(84) Benannte Vertragsstaaten :
**AT CH DE ES FR GB GR IT LI NL SE**

(56) Entgegenhaltungen :
**DE-A- 2 033 708**
**DE-A- 2 925 213**
**DE-C- 3 514 208**
**DE-U- 8 504 975**

(73) Patentinhaber : **Concord Kinderautositze- und**
**Kindermöbel- sowie**
**Geräteherstellungsgesellschaft mbH**
**Industriestrasse 19**
**W-8652 Stadtsteinach (DE)**

(72) Erfinder : **Der Erfinder hat auf seine Nennung**
**verzichtet**

(74) Vertreter : **LOUIS, PÖHLAU, LOHRENTZ &**
**SEGETH**
**Kesslerplatz 1 Postfach 3055**
**W-8500 Nürnberg-1 (DE)**

EP 0 353 377 B1

Jouve, 18, rue Saint-Denis, 75001 PARIS

**Beschreibung**

Die Erfindung betrifft einen Kindersicherheitssitz mit einer auf einem Unterteil angeordneten Sitzschale, die ein Sitzelement und eine Rückenlehne aufweist, wobei der Kindersicherheitssitz mittels eines Dreipunktgurtes an einem Sitz eines Kraftfahrzeugs befestigbar ist, die Rückenlehne des Kindersicherheitssitzes ein Befestigungselement für den Sicherheitsgurt aufweist, und der Kindersicherheitssitz mittels des im Kraftfahrzeug vorhandenen, einen Schulter- und einen Beckengurt aufweisenden Dreipunktgurtes befestigbar ist, wobei der Schultergurt durch das Befestigungselement gehalten wird und an der Rückseite des Kindersicherheitssitzes verläuft, und der Beckengurt zum Festhalten des Unterteils des Kindersicherheitssitzes dient, wobei der Schultergurt entlang der Rückseite des Kindersicherheitssitzes verläuft.

Ein derartiger Kindersicherheitssitz ist aus der DE-U-8 504 975 bekannt. Die Befestigungselemente für den Sicherheitsgurt, d.h. für den Beckengurt und für den Schultergurt des in einem Kraftfahrzeug vorhandenen Dreipunktgurtes sind dort als offene Klammern ausgebildet. In solche Befestigungselemente kann der entsprechende Gurt wohl einfach eingebracht werden, diese Befestigungselemente weisen jedoch den Mangel auf, daß eine ungewollte Loslösung des entsprechenden Gurtes vom zugehörigen Befestigungselement nicht zuverlässig ausgeschlossen werden kann. Das bedeutet jedoch, daß die Betriebssicherheit dieses Kindersicherheitssitzes erheblich beeinträchtigt ist. Das ist insbes. dann der Fall, wenn dieser Kindersicherheitssitz in Fahrtrichtung eines Kraftfahrzeuges angeordnet wird und nicht in der zur Fahrtrichtung entgegengesetzten Richtung.

Aus der EP-A-0049 680 ist ein Kindersicherheitssitz bekannt, bei dem die Befestigungselemente für den Schultergurt bzw. den Beckengurt des Kraftfahrzeug-Sicherheitsgurtes in der Sitzschale einseitig offen, geschlitzt ausgebildet sind. Solche offene Schlitze weisen dieselben Mängel auf wie die oben beschriebenen offenen Klammern. Außerdem ergibt sich beim zuletzt erwähnten Sitz mit den Schlitzen in der Sitzschale der Mangel, daß der Schultergurt des im Kraftfahrzeug vorhandenen Dreipunktgurtes sich entlang eines Teiles seiner Länge über die Vorderseite der Rückenlehne des Kindersicherheitssitzes erstreckt, was als störend empfunden werden muß.

Die DE-A-3 345 588 A1 beschreibt einen Kindersicherheitssitz der eingangs genannten Art, der mit einem Fangkörper versehen ist, der auf der Sitzschale des Kindersicherheitssitzes angeordnet ist. Die Befestigung dieses Kindersicherheitssitzes an einem Sitz eines Kraftfahrzeugs erfolgt mit Hilfe eines speziellen Sicherheitsgurtes, der gleichzeitig auch zur Befestigung des Fangkörpers vorgesehen ist. Es ist deshalb erforderlich, diesen speziellen Sicherheitsgurt zusätzlich zu dem in einem Kraftfahrzeug zur Normalausstattung gehörenden Sicherheitsgurt vorzusehen.

Es sind auch Kindersicherheitssitze bekannt, die nur eine Sitzschale aufweisen, d.h. die nicht in Bezug zu einem Unterteil zwischen mindestens einer Sitzposition und mindestens einer Liegepositon verstellbar sind. Ein derartiger, nicht verstellbarer Kindersicherheitssitz kann zwar mittels des zur Normalausstattung eines Kraftfahrzeuges gehörenden Dreipunktgurtes an einem Sitz des Kraftfahrzeuges dadurch festgelegt werden, daß sowohl der Beckengurt als auch der Schultergurt des Dreipunktgurtes über die Vorderseite des Kindersicherheitssitzes gespannt wird, nachdem im Kindersicherheitssitz ein Kinder der Klasse 1 der ECE R 44/02, d.h. ein Kind mit einem Gewicht zwischen 9 und 18 kg Platz genommen hat. Hierbei besteht jedoch die Gefahr, daß insbes. der Schultergurt dem Halsbereich eines im Kindersicherheitssitz sitzenden Kindes zu nahe kommt. Zur richtigen Positionierung des Schultergurtes ist bei diesem Kindersicherheitssitz zwar ein Befestigungselement vorgesehen, das an einem vorderen seitlichen Abschnitt der Rückenlehne des Kindersicherheitssitzes angeordnet ist, es ist jedoch nicht auszuschließen, daß vergessen wird, das Befestigungselement auch richtig zu positionieren.

Der Erfindung liegt die Aufgabe zugrunde, einen Kindersicherheitssitz der eingangs genannten Art zu schaffen, an welchem der im Kraftfahrzeug vorhandene Sicherheitsgurt kraft- und zeitsparend zuverlässig und betriebssicher anbringbar ist.

Diese Aufgabe wird bei einem Kindersicherheitssitz der eingangs genannten Art dadurch gelöst, daß das Befestigungselement in bezug auf die Rückenlehne zwischen einer den Schultergurt aufnehmenden und einer den Schultergurt festlegenden, d.h. halternden Betriebsstellung verstellbar ist.

Das Befestigungselement ist vorzugsweise am oberen Randabschnitt der Rückenlehne des Kindersicherheitssitzes vorgesehen. Es kann in einem mittleren oder an einem seitlichen Bereich der Rückenlehne vorgesehen sein. Die Anordnung des Befestigungselementes in einem mittleren Bereich weist den Vorteil auf, daß ein derartiger Kindersicherheitssitz sowohl am rechten als auch am linken Sitz der hinteren Sitzbank oder selbstverständlich auch in der Mitte der rückwärtigen Sitzbank befestigt werden kann. Ist das Befestigungselement in einem seitlichen Bereich des oberen Randabschnittes der Rückenlehne des Kindersicherheitssitzes vorgesehen, so ist es vorteilhaft, wenn auf beiden Seiten je ein Befestigungselement vorgesehen ist, um auch einen derartig ausgebildeten Kindersicherheitssitz sowohl auf der rechten Seite als auch auf der linken Seite

EP 0 353 377 B1

der Rückbank eines Kraftfahrzeuges befestigen zu können. Dadurch, daß der zur Befestigung des Kindersicherheitssitzes dienende Schultergurt eines im Kraftfahrzeug vorhandenen Dreipunktgurtes die Rückenlehne nur im Bereich ihres oberen Randabschnittes festhält, ergibt sich der Vorteil, daß sich im Notfall auf den oberen Randabschnitt begrenzte Kräfte ergeben. Durch die am oberen Randabschnitt der Rückenlehne des Kindersicherheitssitzes in einer Notsituation auftretenden Kräfte ergibt sich in Verbindung mit der Höhe der Rückenlehne in Bezug auf das Unterteil in vorteilhafter Weise ein großes Rückhalte-Drehmoment, so daß der Kindersicherheitssitz bei in einem Notfall auftretenden Verzögerungen mit Hilfe des Schultergurtes sicher zurückgehalten wird. Demselben Zweck dient der zum Festhalten des Unterteils des Kindersicherheitssitzes dienende Beckengurt. Das im Kindersicherheitssitz sitzende Kind kann entweder mittels eines am Kindersicherheitssitz vorgesehenen Hosenträgergurtes oder mit Hilfe eines am Kindersicherheitssitz vorgesehenen, d.h. am Kindersicherheitssitz befestigten Fangkörpers am Kindersicherheitssitz sicher festgehalten werden. Ein besonderer Vorteil besteht darin, daß der Schultergurt des im Kraftfahrzeug vorhandenen Dreipunktgurtes nicht auf der Vorderseite des im Kindersicherheitssitz sitzenden bzw. liegenden Kindes verläuft, so daß der Kindersicherheitssitz bzw. seine Sitzschale in Bezug auf das Unterteil wunschgemäß zwischen der mindestens einen Sitzposition und der mindestens einen Liegeposition verstellt werden kann, ohne daß die Gefahr besteht, daß der Schultergurt des im Kraftfahrzeug vorgesehenen Dreipunktgurtes dem Halsbereich des Kindes zu nahe kommt.

Bei einem Kindersicherheitssitz, bei dem die Rückenlehne an ihrem oberen Randabschnitt in einem mittleren Bereich zur Ausbildung eines Traggriffes eine Ausnehmung aufweist, wird vorgeschlagen, daß zwischen der Ausnehmung und dem Rand der Rückenlehne ein Schlitz und daß ein Element zum Verschließen des Schlitzes vorgesehen ist. Dieser Schlitz verbindet den Rand der Rückenlehne mit der gegebenenfalls als Traggriff dienenden Ausnehmung, so daß es in einfacher Weise möglich ist, den Schultergurt eines in einem Kraftfahrzeug vorhandenen Dreipunktgurtes durch den Schlitz in die Ausnehmung derart einzubringen, daß der Schultergurt nur zwischen dem oberseitigen Rand der Rückenlehne und der Ausnehmung in der Rückenlehne auf der Vorderseite des Kindersicherheitssitzes und im übrigen auf der Rückseite desselben verläuft, so daß sich der Schultergurt für ein im Kindersicherheitssitz befindliches Kind nicht störend bemerkbar macht. Der Schlitz weist dabei nur eine derartig geringe Schlitzbreite auf, daß es gerade möglich ist, den Schultergurt eines im Kraftfahrzeug vorhandenen Dreipunktgurtes mit seiner dünnen Schmalseite durch den Schlitz durchzustecken. Wenn das Material der Rückenlehne des Kindersicherheitssitzes eine ausreichende Formstabilität aufweist, kann es ausreichend sein, den Schlitz nur mit einer sehr kleinen Spaltbreite auszubilden. Üblicherweise wird der Schultergurt des Dreipunktgurtes nämlich im Betriebszustand, d.h. im Festhaltezustand des Kindersicherheitssitzes zum Schlitz mindestens annähernd senkrecht orientiert sein, so daß der Schultergurt mit seiner Breitseite den schmalen Schlitz überdeckt.

Bei dem zum Verschließen des Schlitzes vorgesehenen Element kann es sich um eine Hülse handeln, die nach dem Einbringen des Schultergurtes in die Ausnehmung eingesteckt wird. Es ist jedoch auch möglich, das zum Verschließen des Schlitzes vorgesehene Element als Klammer auszubilden. Eine derartige Klammer wird entweder ebenfalls in die Ausnehmung eingesteckt oder derartig ausgebildet, daß sie sich von der Ausnehmung bis zum oberseitigen Rand der Rückenlehne des Kindersicherheitssitzes erstreckt.

Bei einer anderen Ausbildung des erfindungsgemäßen Kindersicherheitssitzes, bei dem die Rückenlehne an ihrem oberen Randabschnitt in einem mittleren Bereich zur Ausbildung eines Traggriffes eine Ausnehmung aufweist, ist die Ausnehmung vorzugsweise von einer Stange überspannt, und ist der Schultergurt mit einer Schlaufe an der Stange festlegbar. Bei einer solchen Ausbildung des Kindersicherheitssitzes braucht die Rückenlehne nicht mit einem Schlitz ausgebildet zu sein, was nicht nur eine Vereinfachung seiner Herstellung ergibt sondern es wird außerdem seine Festigkeit und Betriebssicherheit in vorteilhafter Weise erhöht. Der Schultergurt braucht nur mit einer Schlaufe durch die in der Rückenlehne vorhandene, und bislang als Tragausnehmung dienende Ausnehmung durchgesteckt zu werden. In Querrichtung zu dieser Schlaufe wird dann die Stange zwischen der Schlaufe und der Rückenlehne derart angeordnet, daß nach einer Straffung des Schultergurtes die Stange an der Rückenlehne und somit der Schultergurt an der Rückenlehne festgelegt ist.

Die Stange überspannt die Ausnehmung vorzugsweise an der Vorderseite der Rückenlehne. Die Stange weist also eine Längenabmessung auf, die größer ist als die Querausdehnung der in der Rückenlehne vorhandenen Ausnehmung.

Als vorteilhaft hat es sich erwiesen, wenn die Stange an der Rückenlehne schwenkbeweglich befestigt ist. Diese Befestigung kann dadurch erfolgen, daß die Rückenlehne auf beiden Seiten im Anschluß an die Ausnehmung mit je einer Rille ausgebildet ist, in welchen die beiden Endabschnitte der Stange eingerastet werden können. Auf diese Weise macht sich die Stange im eingerasteten Zustand nicht störend bemerkbar. Die Befestigung der Stange an der Rückenlehne kann dadurch erfolgen, daß einer der beiden Endabschnitte der Stange an der Rückenlehne derartig festgelegt ist, daß die Stange in Bezug auf die Rückenlehne und damit in Bezug auf die in der Rückenlehne vorgesehene Ausnehmung eine Schwenkbewegung auszuführen in der Lage ist.

3

Dadurch ergibt sich eine unverlierbare Anordnung der Stange an der Rückenlehne des Kindersicherheitssitzes und gleichzeitig eine einfache Möglichkeit, den Schultergurt an der Rückenlehne festzulegen. Zu diesem Zweck wird die Stange in Bezug auf die Rückenlehne aufgeschwenkt, der Schultergurt in Form einer Schlaufe von der Rückseite der Rückenlehne durch die in der Rückenlehne vorhandene Ausnehmung eingesteckt und über die nach vorne aufgeschwenkte Stange herumgelegt. Anschließend wird die Stange zur Rückenlehne zurückgeschwenkt und der Schultergurt gestrafft. Es ergibt sich eine ausgezeichnete Verbindung zwischen der Rückenlehne und dem Schultergurt und die Möglichkeit, die Rückenlehne des Kindersicherheitssitzes wunschgemäß verstellen zu können.

Weitere Einzelheiten ergeben sich aus der nachfolgenden Beschreibung von in der Zeichnung schematisch dargestellten Ausführungsbeispielen des erfindungsgemäßen Kindersicherheitssitzes. Es zeigt: L

Fig. 1 eine Vorderansicht eines Kindersicherheitssitzes,

Fig. 2 einen Längsschnitt durch eine Ausführungsform einer abschnittweise dargestellten Rückenlehne des Kindersicherheitssitzes gemäß Fig. 1,

Fig. 3 eine abschnittweise Vorderansicht der Rückenlehne gemäß Fig. 2 in Blickrichtung des Pfeiles V,

Fig. 4 eine abschnittweise Vorderansicht einer anderen Ausführungsform des Kindersicherheitssitzes,

Fig. 5 eine Seitenansicht der Ausführungsform des Kindersicherheitssitzes gemäß Fig.4, wobei die Rückenlehne teilweise längsgeschnitten dargestellt ist,

Fig. 6 eine Vorderansicht einer abschnittweise dargestellten Rückenlehne eines weiteren Kindersicherheitssitzes,

Fig. 7 eine räumliche Darstellung eines Abschnittes der Rückenlehne gemäß Fig. 6, und

Fig. 8 einen Schnitt entlang der Schnittlinie X-X aus Fig. 6.

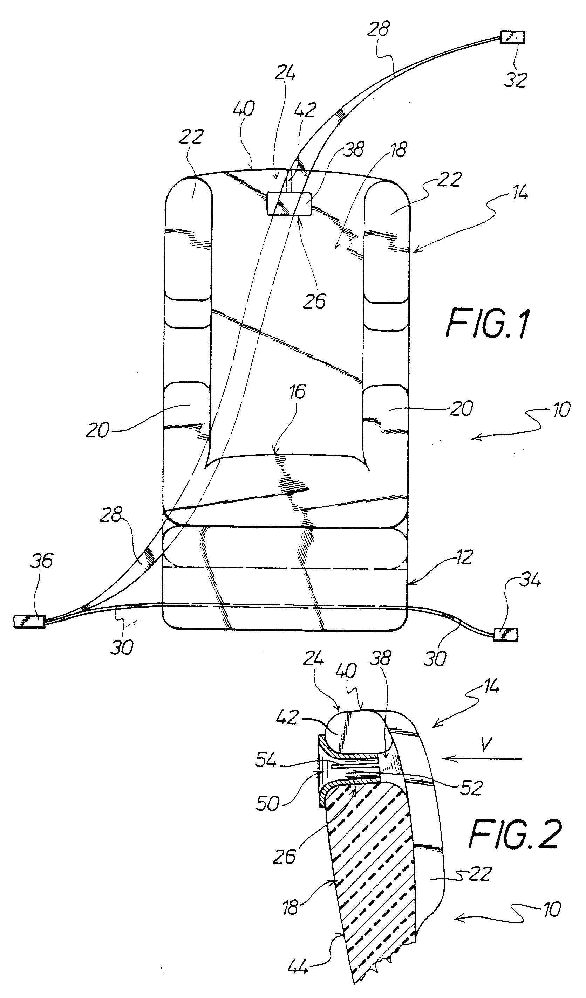

Fig. 1 zeigt einen Kindersicherheitssitz 10, der ein Unterteil 12 und eine auf dem Unterteil 12 zwischen mindestens einer Sitzposition und mindestens einer Liegeposition verstellbare Sitzschale 14 aufweist. Eine (nicht dargestellte) Arretiereinrichtung dient dazu, die Sitzschale 14 in Bezug auf das Unterteil 12 in einer gewünschten Position zu arretieren.

Die Sitzschale 14 weist ein Sitzelement 16 und eine Rückenlehne 18 auf. Von den beiden einander gegenüberliegenden Seiten des Sitzelementes 16 erstrecken sich Armlehnen 20 hoch. Im Kopfbereich der Rückenlehne 18 des Kindersicherheitssitzes 10 ist auf jeder Seite der Sitzschale 14 je eine Kopflehne 22 vorgesehen. Die Rückenlehne 18 des Kindersicherheitssitzes 10 ist an ihrem oberen Randabschnitt 24 mit einem Befestigungselement 26 versehen, das zur Festlegung eines Schultergurtes 28 eines Dreipunktgurtes dient, wie er in einem Kraftfahrzeug vorhanden ist. Außer dem Schultergurt 28 weist der Dreipunktgurt noch einen Beckengurt 30 auf. Der Beckengurt 30 erstreckt sich durch das Unterteil 12 des Kindersicherheitssitzes 10 hindurch, so daß sich mit Hilfe des Schultergurtes 28 und des Beckengurtes 30 eine sichere Befestigung des Kindersicherheitssitzes 10 ergibt. Mit der Bezugsziffer 32 ist ein Befestigungsorgan bezeichnet, mit dem der Schultergurt 28 am (nicht dargestellten) Kraftfahrzeug befestigt ist. Der Beckengurt 30 ist mit einem Befestigungsorgan 34 am nicht dargestellten Kraftfahrzeug befestigt. Der Schultergurt 28 und der Beckengurt 30 sind mit ihrem vom entsprechenden Befestigungsorgan 32, 34 entfernten Ende mit einem Befestigungselement 36 verbunden, das in ein (nicht dargestelltes) Sicherheitsgurtschloß einrastbar ist.

In Fig. 1 ist eine Ausbildung des Kindersicherheitssitzes 10 gezeichnet, bei der das Befestigungselement 26 für den Schultergurt 28 eine Ausnehmung 38 aufweist. Um den Schultergurt 28 durch die Ausnehmung 38 durchführen zu können, ist zwischen der Ausnehmung 38 und dem oberseitigen Rand 40 der Rückenlehne 18 des Kindersicherheitssitzes 10 ein schmaler Schlitz 42 vorgesehen, durch den der Schultergurt 28 mit seiner dünnen Schmalseite durchgesteckt werden kann.

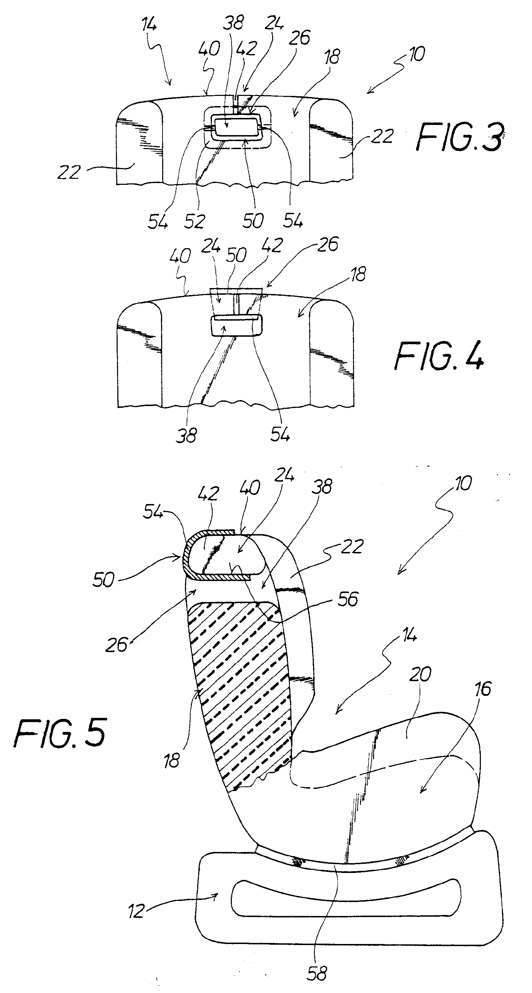

Die Figuren 2 und 3 zeigen eine Ausbildung des Kindersicherheitssitzes 10, bei welchem die Rückenlehne 18 der Sitzschale 14 wie bei dem in Fig. 1 dargestellten Kindersicherheitssitz 10 mit einem Befestigungselement 26 versehen ist, das eine Ausnehmung 38 aufweist. Die Ausnehmung 38 ist am oberen Randabschnitt 24 der Rückenlehne 18 in einem mittleren Bereich derselben vorgesehen. Die Ausnehmung 38 ist mit dem oberseitigen Rand 40 der Rückenlehne 18 mittels eines schmalen Schlitzes 42 verbunden. Um eine ungewollte Entfernung des sich durch die Ausnehmung 38 hindurcherstreckenden (nicht dargestellten) Schultergurtes aus der Ausnehmung 38 bzw. durch den schmalen Schlitz 42 hindurch sicher zu verhindern, ist in die Ausnehmung 38 von der Rückseite 44 der Rückenlehne 18 her ein Verschlußelement 50 in Form einer einseitig offenen Hülse 52 eingesteckt. Durch die Hülse 52 wird der Schlitz 42 verschlossen bzw. überdeckt, so daß der sich durch die Ausnehmung 38 bzw. durch die Hülse 52 hindurcherstreckende Schultergurt daran gehindert wird, sich ungewollt durch den Schlitz 42 hindurch aus der Ausnehmung 38 herauszubewegen. Selbstverständlich ist es auch möglich, daß die Hülse 52 von der Vorderseite der Rückenlehne 18 in die Ausnehmung 38 hineingesteckt ist. Die Hülse 52 kann mit mindestens einem Längsschlitz 54 und somit elastisch federnd ausgebildet sein. Dadurch wird das Einstecken der Hülse 52 in die Ausnehmung 38 erleichtert, wobei gleichzeitig eine sichere Klemmbefestigung der Hülse 52 in der Ausnehmung 38 gewährleistet wird. Mit der Bezugsziffer 22 sind auch in den Figuren 2 und 3 die Kopflehnen der Sitzschale 14 bezeichnet.

In den Figuren 4 und 5 ist ein Befestigungselement 26 für den Schultergurt 28 eines in einem Kraftfahrzeug vorhandenen Dreipunktgurtes schematisch dargestellt, das eine Ausnehmung 38 aufweist, die im oberen Randabschnitt 24 der Rückenlehne 18 der Sitzschale 14 des Kindersicherheitssitzes 10 vorgesehen ist, und die mit dem oberseitigen Rand 40 der Rückenlehne 18 durch einen schmalen Schlitz 42 verbunden ist. Insofern entspricht die Ausführung der Sitzschale 14 gemäß den Figuren 4 und 5 der Ausbildung der Sitzschale 14 entsprechend den Figuren 1 bis 3. Das Verschlusselement 50 zum Verschließen des schmalen Schlitzes 42 ist bei dieser Ausbildung des Kindersicherheitssitzes 10 als Klammer 54 ausgebildet, die zwischen dem oberseitigen Rand 40 und der dem Rand 40 zugewandten Oberseite 56 der Ausnehmung 38 festgeklemmt ist. Selbstverständlich wäre es bspw. auch möglich, in der Ausnehmung 38 eine U-förmige Klammer anzuordnen, die mit einem ihrer beiden Schenkel den schmalen Schlitz 42 überdeckt.

Insbesondere aus Fig. 5 ist das mit der Rückenlehne 18 einteilig verbundene Sitzelement 16 der Sitzschale 14 zu erkennen, wobei vom Sitzelement 16 seitlich zwei Armlehnen 20 nach oben stehen, die mit der Rückenlehne 18 einteilig verbunden sind. Mit der Bezugsziffer 22 sind auch hier wieder die beiden Kopflehnen bezeichnet, von denen in dieser Seitenansicht nur eine Kopflehne sichtbar ist. Auf der Unterseite des Sitzelementes 16 ist eine Gleitschienen-Führungseinrichtung 58 vorgesehen, die mit einem Teil am Sitzelement 16 und die mit ihrem zweiten Teil am Unterteil 12 des Kindersicherheitssitzes 10 befestigt ist.

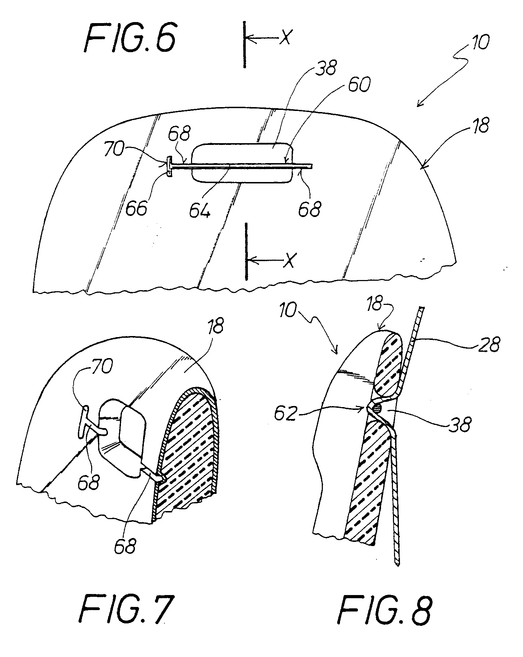

Die Figuren 6 bis 8 zeigen eine Ausbildung des Kindersicherheitssitzes 10 bzw. eines Abschnittes der Rückenlehne 18 des Kindersicherheitssitzes 10, die mit einer Ausnehmung 38 ausgebildet ist. Die Ausnehmung 38 ist in einem mittleren Abschnitt der Rückenlehne 18 vorgesehen und von einer Stange 60 überspannt. Die Stange 60 weist eine Längenabmessung auf, die größer ist als die Quererstreckung, d.h. die lichte Breite der Ausnehmung 38. Die Stange 60 besteht aus einem Längsteil 64 und aus einem Querteil 66, das an einem Ende des Längsteiles 64 fixiert ist.

Die Rückenlehne 18 weist an ihrer Vorderseite in der unmittelbaren Nachbarschaft der Ausnehmung 38 Rillen 68 auf, die miteinander fluchten. Eine der Rillen 68 mündet in eine Querrille 70 ein. Die Stange 60 ist mit ihrem Querteil 66 in die Querrille 70 derart eingerastet, daß die Stange 60 um das Querteil 66 bzw. die Querrille 70 herum von der Ausnehmung 38 weg bzw. zur Ausnehmung 38 hin verschwenkbar ist. Zum Befestigen des Schultergurtes 28 (s. Fig. 8) an der Rückenlehne 18 des Kindersicherheitssitzes 10 wird die Stange 60 zuerst mit ihrem Längsteil 64 aus den beiden miteinander fluchtenden Rillen 68 ausgerastet und um das Querteil 66 bzw. die Querrille 70 von der Vorderseite der Rückenlehne 18 nach vorne weggeschwenkt. Dann wird der Schultergurt 28 mit einer Schlaufe 62 durch die Ausnehmung 38 durchgesteckt, wobei die Schlaufe 62 über die Vorderseite der Stange 60 herumgewunden wird. Anschließend wird die Stange 60 um ihre Drehachse 66 bzw. 70 herum zur Rückenlehne 18 zurückgeschwenkt, bis das Längsteil 64 der Stange 60 in die Rillen 68 einrastet. Gleichzeitig oder anschließend wird der Schultergurt 28 gestrafft.

Zwischen der Rückenlehne 18 und dem Schultergurt 28 ergibt sich eine derartig variable Verbindung, daß der Kindersicherheitssitz 10 zwischen mindestens einer Sitzposition und mindestens einer Liegeposition verstellt werden kann, ohne daß durch diese Verstellung die Verbindung zwischen der Rückenlehne 18 und dem Schultergurt 28 beeinträchtigt wird.

## Patentansprüche

1. kindersicherheitssitz mit einer auf einem Unterteil (12) angeordneten Sitzschale (14), die ein Sitzelement (16) und eine Rückenlehne (18) aufweist, wobei der Kindersicherheitssitz (10) mittels eines Dreipunktgurtes an einem Sitz eines Kraftfahrzeuges befestigbar ist, die Rückenlehne (18) des kindersicherheitssitzes (10) ein Befestigungselement (26) für den Sicherheitsgurt aufweist, und der kindersicherheitssitz (10) mittels des im kraftfahrzeug vorhandenen, einen Schulter- und einen Beckengurt (28, 30) aufweisenden Dreipunktgurtes befestigbar ist, wobei der Schultergurt (28) durch das Befestigungselement (26) gehalten wird und an der Rückseite (44) des kindersicherheitssitzes verläuft, und der Beckengurt (30) zum Festhalten des Unterteils (12) des kindersicherheitssitzes (10) dient, wobei der Schultergurt (28) entlang der Rückseite (44) des Kindersicherheitssitzes verläuft, **dadurch gekennzeichnet**, daß das Befestigungselement (26) in bezug auf die Rückenlehne (18) zwischen einer den Schultergurt (28) aufnehmenden und einer den Schultergurt (28) festlegenden Betriebsstellung verstellbar ist.

2. kindersicherheitssitz nach Anspruch 1, bei dem die Rückenlehne (18) an ihrem oberen Randabschnitt (24) in einem mittleren Bereich zur Ausbildung eines Traggriffes eine Ausnehmung (38) aufweist, **dadurch gekennzeichnet**, daß zwischen der Ausnehmung (38) und dem Rand (40) der Rückenlehne (18) ein Schlitz (42) und daß ein Element (50) zum Verschließen des Schlitzes (44) vorgesehen ist.

3. kindersicherheitssitz nach Anspruch 2, **dadurch gekennzeichnet**, daß das zum Verschließen des Schlitzes (42) vorgesehene Element (50) als Hülse (52) ausgebildet ist.

4. kindersicherheitssitz nach Anspruch 2, **dadurch gekennzeichnet**, daß das zum Verschließen des Schlitzes (42) vorgesehene Element (50) als klammer (54) ausgebildet ist.

5. kindersicherheitssitz nach Anspruch 1, bei dem die Rückenlehne (18) an ihrem oberen Randabschnitt (24) in einem mittleren Bereich zur Ausbildung eines Traggriffes eine Ausnehmung (38) aufweist, **dadurch gekennzeichnet**, daß die Ausnehmung (38) von einer Stange (60) überspannt ist, und daß der Schultergurt (28) mit einer Schlaufe (62) an der Stange (60) festlegbar ist.

6. kindersicherheitssitz nach Anspruch 5, **dadurch gekennzeichnet**, daß die Stange (60) die Ausnehmung (38) an der Vorderseite der Rückenlehne (18) überspannt.

7. kindersicherheitssitz nach Anspruch 6, **dadurch gekennzeichnet**, daß die Stange (60) an der Rückenlehne (18) schwenkbeweglich befestigt ist.

## Claims

1. A child's safety seat with a seat shell (14) arranged on a bottom part (12), having a seat element (16) and a back rest (18), wherein the child's safety seat (10) can be secured to the seat of a motor vehicle by means of a three-point belt, the back rest (18) of the child's safety seat (10) has an element (26) for securing the safety belt, and the child's safety seat (10) can be secured by means of the three-point belt provided in the motor vehicle which has a shoulder belt (28) and a lap belt (30), wherein the shoulder belt (28) is held by the securing element (26) and extends at the rear side (44) of the child's safety seat, and the lap belt (30) serves to secure the bottom part (12) of the child's safety seat (10), the shoulder belt (28) extending along the rear side (44) of the child's safety seat, characterized in that the securing element (26) is adjustable with respect to the back rest (18) between an operative position receiving the shoulder belt (28) and one fixing the shoulder belt (28).

2. A child's safety seat according to claim 1, wherein the back rest (18) has in its upper edge region (24) in a median zone, a cutout (38) for forming a carrying handle, characterized in that between the cutout (38) and the edge (40) of the hack rest (18), provision is made for a slot (42) and that an element (50) is provided for closing the slot (42).

3. A child's safety seat according to claim 2, characterized in that the element (50) provided for closing the slot (42) is formed as a sleeve (52).

4. A child's safety seat according to claim 2, characterized in that the element (50) provided for closing the slot (42) is designed as a clip (54).

5. A child's safety seat according to claim 1, wherein the back rest (18) has in its upper edge region (24) in a median zone, a cutout (38) for forming a carrying handle, characterized in that the cut out (38) is spanned by a rod (60) and that the shoulder belt (28) can be secured on the rod (60) by means of a loop (62).

6. A child's safety seat according to claim 5, characterized in that the rod (60) spans the cutout (38) at the front side of the back rest (18).

7. A child's safety seat according to claim 6, characterized in that the rod (60) is pivotably mounted on the back rest (18).

## Revendications

1. Siège de sécurité pour enfants comportant une coquille d'assise (14) disposée sur un élément inférieur (12) et se composant d'un élément d'assise (16) et d'un dossier (18), et le siège de sécurité pour enfants (10) est fixé au moyen d'une ceinture de sécurité à trois points à un siège d'un véhicule, le dossier (18) du siège de sécurité pour enfants (10) comporte un élément de fixation (26) pour la ceinture de sécurité et le siège de sécurite pour enfants (10) peut être fixé au moyen de la ceinture trois points présentant une ceinture d'épaule et une ceinture de bassin (28, 30) prévues dans le véhicule, la ceinture d'épaule (28) étant maintenue par l'élément de fixation (26) et s'étend sur le dos (44) du siège de sécurité pour enfants et la ceinture de bassin (30) sert à maintenir la partie inférieure (12) du siège de sécurité pour enfants (10), et la ceinture d'épaule (28) s'étend le long du dos (44) du siège de sécurité pour enfants, caractérisé en ce que l'élément de fixation (26) est réglable par rapport au dossier (18), entre une position de service relevant la ceinture d'épaule (28) et une position de service immobilisant la ceinture d'épaule.

2. Siège de sécurité pour enfants selon la revendication 1, dans lequel le dossier (18) présente un évidement (38) dans la portion milieu de la section supérieure (24) de son bord, pour créer une prise de traction, caractérisé en ce qu'entre l'évidement (38) et le bord (40), le dossier (18) comporte une fente (42) et un élément (50) est prévu pour obturer cette fente.

3. Siège de sécurité pour enfants selon la revendication 2, caractérisé en ce que l'élément (50) pour obturer la fente (42) a la forme d'un manchon (52).

4. Siège de sécurité pour enfants selon la revendication 2, caractérisé en ce que l'élément (50) pour obturer la fente (42) a la forme d'une pince (54).

5. Siège de sécurité pour enfants selon la revendication 1, dans lequel le dossier (18) présente un évidement (38) dans la portion milieu de la section supérieure (24) de son bord pour créer une prise de traction, caractérisé en ce que l'évidement (38) est traversé par une tige (60), et la ceinture d'épaule est immobilisable par un passant (62) sur la tige (60).

6. Siège de sécurité pour enfants selon la revendication 5, caractérisé en ce que la tige (60) traverse l'évidement (38) sur le côté avant du dossier (18).

7. Siège de sécurité pour enfants selon la revendication 6, caractérisé en ce que la tige (60) est fixée au dossier ( 18) de manière articulée.

*FIG.1*

*FIG.2*

FIG.3

FIG.4

FIG.5

FIG.6

FIG.7

FIG.8